# EUROPEAN PATENT SPECIFICATION

(11) **EP 1 127 089 B1**
(45) Date of publication and mention of the grant of the patent: **24.08.2005**
(21) Application number: 99950537.3
(22) Date of filing: 22.09.1999
(51) Int. Cl.: C08L 29/04, C08L 21/00, C08L 23/02, C08L 67/00, C08L 59/00, C08L 71/12, C08L 69/00, C08K 5/548

(54) **POLYMERS OF A HYDROPHOBIC NATURE, FILLED WITH STARCH COMPLEXES**
POLYMERE VON HYDROPHOBER NATUR, GEFÜLLT MIT STÄRKE-KOMPLEXEN
POLYMERES DE NATURE HYDROPHOBE CONTENANT UNE MATIERE DE CHARGE A BASE DE COMPLEXE D'AMIDON

(30) Priority: 22.09.1998 IT TO980800
(43) Date of publication of application: 29.08.2001
(73) Proprietor: NOVAMONT S.p.A., 28100 Novara (IT)
(72) Inventor: BASTIOLI, Catia, I-28100 Novara (IT); BELLOTTI, Vittorio, I-28010 Fontaneto d'Agogna (IT); MONTINO, Alessandro, I-27038 Robbio Lomellina (IT)
(74) Representative: Rambelli, Paolo
(86) International application number: PCT/EP1999/007038
(87) International publication number: WO 2000/017270

(56) References cited:
- EP-A- 0 404 727
- EP-A- 0 795 581
- EP-A- 0 965 615
- WO-A-92/14782
- WO-A-98/20073
- DATABASE WPI Derwent Publications Ltd., London, GB; AN 94-057775 XP002031921 & CA 2 069 861 A (BESHAY) 29 November 1993 (1993-11-29)

## Description

The present invention relates to polymers of a hydrophobic nature incompatible with starch comprising, as a filler, a starch complex in the form of particles of very small dimensions.

It is known from the literature (WO 92/14782, Bastioli et al. J. of Environmental Pol. Degradation - No. 1, Vol. 3, 181-191, 1993) that starch is present in products produced by the extrusion of mixtures of starch with copolymers of ethylene with vinyl alcohol, in the form of a complex forming an interpenetrated structure with the ethylene copolymer. Upon TEM (Transmission Electron Microscope) examination, the structure shows the presence of phases with sub-micronic dimensions mixed with no sharp separating boundaries.

As a result of treatment in water at 100°C with vigorous stirring, the interpenetrated structure breaks up, forming a micro-dispersion of micro-spherical aggregates with particles of diameter of less than 1 micron, or forming a layered structure by which the starch is rendered partially soluble.

The droplet-like structure has been observed with the use of an EVOH copolymer containing 60% of vinyl alcohol, in moles; the layered structure, on the other hand, has been produced with a copolymer containing 80% of vinyl alcohol, in moles.

There is a great need to be able to disperse starch in polymers incompatible with starch, in the form of a complex which has poor solubility in water, with very small dimensions of the dispersed particles, in view of the improved and novel properties which this filler could introduce.

Up to now, starch has been dispersed in hydrophobic polymers such as polyethylene in the non-destructured, crystalline form.

Destructured starch has been used as a filler in rubbers (US 5, 374, 671 and 5,545,680). However, the dimensions of the dispersed particles are not small enough because of difficulties in dispersing the starch finely in an incompatible polymer matrix such as rubber. The starch is in fact dispersed in the form of filament-like particles.

In the United States patents cited above, the possibility of using destructured starch in compositions containing thermoplastic polymers is also pointed out. However, the compositions referred to in the patents are not suitable for the formation of micro-dispersions, both because the method of preparing the compositions is not suitable for the formation of the right micro-structures, and owing to the fact that excessively hydrophilic copolymers unsuitable for forming micro-structures are used. In the case of the EVOH copolymer, the vinyl alcohol content is 73% in moles.

In the patents cited above, reference is also made to the possibility of using a grafting agent which, however, is not identified further, and which can act as a compatibilizing agent between starch and rubber.

The present invention provides hydrophobic polymers filled with starch complexes and a process for their preparation, as defined in the appended claims.

It has unexpectedly been found that it is possible to disperse, in hydrophobic polymers incompatible with starch, starch complexes characterized by second-derivative FTIR absorption in the region of 940-950 cm⁻¹ or by XR diffraction peaks in the regions of 11°-13° and 19°-21° of 2θ, in the form of particles with poor solubility in water and having numeral average size of less than 1 micron, and which are fixed to the polymer matrix by means of (a) coupling agent(s) containing groups which can interact with the polymer matrix and with the complex (external coupling agent) or by means of reactive groups present in the complex capable of being fixed to the polymeric matrix thus acting as internal coupling agent. In this case, the use of the external coupling agent can be omitted.

This is, for example, the case of matrices comprising a biodegradable polymer such as the aliphatic or aliphatic-aromatic polyesters, the aliphatic polyamides, polyamides-polyesters, and polyurethane-polyesters.

As it will be specified hereinafter, the complex usable with the biodegradable matrices of the type above indicated, is a complex of starch with a complexing agent different from the polymer forming the polymeric matrix and from the ethylene-vinylalcohol copolymers.

The complex is generally substantially insoluble in water at 100°C.

The solubility is less than 20% by weight.

Amylose is present in the complex in wholly complexed form, whereas the amylopectin can be hydrolyzed with acids. It is considered that the amylopectin macro-molecules are connected at various points of the chain by hydrogen bonds and by entanglements with the molecules of amylose complexed with the synthetic polymer or other complexing agents. Since the dimensions of the micro-particles of the complex are of the order of those expected for the amylopectin molecules, these molecules can be considered as forming a nucleus surrounded by a shell formed by the amylose/synthetic polymer complex or other complexing agent.

The shell, by interacting with hydrogen bridges or by entanglements with the nucleus, acts as a screen to the solvation of the amylopectin.

The starch compositions used for the dispersion indicated above are constituted by or comprise starch complexes showing the above specified FTIR band or XR diffraction, peaks from which micro-dispersions of particles with numeral average diameter of less than 1 micron are formed by treatment with boiling in water with vigorous stirring.

The starch usable for the formation of the complexes usable as fillers contains more than 15% by weight, and preferably more than 20% by weight, of amylose; amylopectin is present in quantities up to 85% by weight and preferably up to 80%.

The starch may originate from tubers, cereals or beans and may be maize, potato, tapioca, pea, or rice starch. It is preferably starch with an amylose content greater than 20% by weight.

Starches with an amylopectin content greater than 85% by weight are not suitable since the amylopectin does not form complexes with the polymers which complex with amylose; a large quantity of the starch is solubilized by treatment by boiling in water.

The compositions mentioned above are prepared by extrusion of the starch in mixture with the complexing thermoplastic polymer and, optionally, with a plasticizer under temperature and shear-force conditions such as to render the components of the mixture rheologically compatible or with a complexing agent. Suitable preparation methods are described, for example, in WO 92/14782. It is also possible to use methods in solution, using common solvents for starch and the complexing agent.

The compositions preferably have a water content at the output of the extruder, before conditioning, of less than 20% by weight and preferably less than 10% by weight, but preferably higher than 2% and preferably not lower than 4%. A preferred water content as referred to starch plus water in the initial formulation is higher than 5% and lower than 30%. The Tg of the compositions is preferably below 0°C.

The formation of micro-dispersions by boiling in water with stirring and optionally ultrasonication can constitute a criterion for the selection of the operating conditions suitable for the formation of the compositions usable in the method of the invention.

The polymer compatible with starch contains hydrophilic groups intercalated with hydrophobic sequences in which the hydrophilicity properties are balanced in a manner such that the resulting extruded compositions can provide a partial or complete insolubilization of the starch by treatment in boiling water.

For example, in the case of copolymers of ethylene with vinyl alcohol, the vinyl alcohol content, which is preferably greater than 50% in moles, has not to exceed 80-90% in moles, otherwise, by boiling in water, the formation of layers instead of micro-dispersions occurs and starch becomes soluble.

Other suitable copolymers are copolymers of ethylene with acrylic acid, preferably containing from 15 to 25% by weight of acrylic acid.

In general, all copolymers of ethylene with polar monomers such as copolymers with methacrylic, crotonic and itaconic, acids, maleic anhydride and terpolymers containing vinyl acetate are suitable.

Other polymers which can form complexes with starch are 6-6, 6-9 or 12 aliphatic polyamides, aliphatic and aliphatic-aromatic polyesters, polyurethanes/polyamides, polyurethanes/polyethers, polyamides/polyesters, polyurea/polyesters, polyurea/polyethers, polylactic acid, polyglycolic acid, poly(lactic-glycolic) acid, polycaprolactone/urethane, in which the size of the polycaprolactone block is between 300 and 3000 molecular weight.

Other complexing agents can be fatty acids and their derivatives. The complexing agents can contain reactive groups for the hydrophobic matrix thus performing the function of internal coupling agents, such as tetrasulphide or unsaturated groups in case of rubbery matrices.

In the case of ethylene/vinyl alcohol copolymers containing from 20 to 50% of ethylene, in moles, the quantity of copolymer which can complex all of the available amylose is about 20% by weight of the composition.

The more the concentration of the EVOH is reduced, the greater is the relative quantity of amylose complexed, this quantity changing from twice the quantity of EVOH when the concentration of EVOH is 10%, to 3 times when it is reduced to 5%.

This shows that complexing between amylose and EVOH does not form a complex of well-defined composition, but forms a family of complexes.

The preferred formulations for the starch complexes comprise a content by weight of starch between 45 and 65%, with more than 20% of amylose; a complexing agent between 5 and 35%; plasticizers from 0 to 20% and added water from 0 to 15%. Such formulations minimize the size of the dispersed phase.

The dispersion of the composition comprising the starch complex in the hydrophobic polymer is performed by blending in accordance with known methods, for example, by extrusion or calendering in a Banbury mixer in the case of rubbers.

The preferred complexed starch for rubbery compositions is dispersable in the rubber by mixing in a range of temperature between 130 and 170 °C, preferably between 140 and 160 °C.

It is possible to operate in the presence of a coupling agent. When the complex contains groups which can be fixed to the polymer matrix of the starch, the use of the coupling agent can be omitted.

Suitable coupling agents which can react with the filler and with the polymer matrix when the matrix is of a polyolefin nature or is a styrene-butadiene, polybutadiene, polyisoprene or nitrile rubber, an elastomeric, ethylene/propylene or ethylene/propylene diene copolymer are aliphatic silanes such as dimethyldichlorosilane, methyltrichlorosilane, mercaptopropyltrimethoxysilane and vinyl silanes such as methacryl-oxy-propyltrimethoxysilane and vinyltriethoxysilane.

A particularly suitable silane is bis-3-triethoxysilylpropyl tetrasulphide.

Other coupling agents which may be used are alkyl titanates or esters such as tetraisooctyl titanate, isopropyldiisostearyl-metacryl titanate, and isopropyltriacryl titanate.

The quantity of coupling agent is between 0.05 and 10% by weight of the starch complex, preferably 0.1-5% by weight.

The coupling agent is preferably added to the starch complex/hydrophobic polymer mixture at the stage of the blending thereof.

The hydrophobic polymer comprises, among others, ethylene polymers such as LDPE, LLDPE, HDPE, ultra low LLDPE, crystalline propylene polymers and copolymers, in particular, isotactic polypropylene, and crystalline propylene copolymers containing 1-10% by weight of ethylene or of a C₄-C₁₀ alpha olefin.

Other thermoplastic hydrophobic polymers which may be used comprise polyamides, aromatic polyester resins, polyoxymethylene resins, polycarbonates, polyphenylene oxide resins. The rubbers used in the tire industry, such as styrene-butadiene rubbers, polybutadiene or polyisoprene rubbers, or the EP and EPDM rubbers may also be used.

The rubbers may contain, as fillers, the ingredients such as, for example, silica, carbon black and the vulcanizing agents and vulcanization accelerators which are normally used in this field. The rubber matrices containing the starch complexes according to the present invention are conveniently used in the preparation of tyres having valuable properties.

Similarly, the thermoplastic polymers may contain additives such as colourings, stabilizers, and flame-retardant compounds normally used in the field.

The fillers having the characteristics specified above confer to the polymer matrices properties of better coatability, particularly in the case of olefin polymers, better electrical and heat dissipation, a better elastic flow and low hysteresis (particularly in the case of rubbers), and other advantageous properties which vary from one polymer to another.

Biodegradable hydrophobic polymers are also usable. Examples of such polymers are: aliphatic, polyesters, aliphatic-aromatic copolyesters, aliphatic polyamides, polyamides-polyesters polyurea-polyesters, polyurethane-polyesters poliurethane-polyamide. Specific examples are poly-epsilon-caprolactone and poly(butylene terepthalatebutylene adipate).

In the case of the above mentioned biodegradable polymers it has been found advantageous to add to the polymeric matrix a starch complex wherein the complexing agent is a polymer different from the polymer forming the matrix and the ethylene-vinylalcohol copolymers, or selected from the fatty acids and the derivates thereof or from other complexing agents.

It is possible using this type of complex to tailor-make the properties of starch to render the same similar to those of the matrix or different.

For example in the case of the compostable bags, it has been found useful to retard the biodegradability of the starch complex dispersed in the aliphatic or aliphatic-aromatic polyester matrix by complexing the starch with a slowly or not at all biodegradable polymer to avoid the premature degradation of the bag when the same, filled with waste, is stored in humid places and/or contact with condense.

The premature bag breakage with consequent waste spreading is troublesome and represents a limit to the use of the compostable bags for the collection of organic waste.

The polymers used to retard the biodegradability of starch comprise polylactic acid, polyglycolic acid and poly(lactic-glycolic) acid copolymers.

Examples of not significantly biodegradable polymers are the ethylene-vinylacetate copolymers, the ethylene-acrylic acid copolymers, and in general, the ethylene copolymers containing polar groups different from the OH groups.

In the case of complexing agents immiscible with the polyester base-matrix, it is possible to form the complex with the starch directly during the melt-blending of the polyester-starch mixture.

The melt-blending is carried out under temperature and shear conditions suitable to render the starch and the polyester polymeric components rheologically compatible.

As already mentioned, the dispersion of the starch complex in a matrix formed or comprising a biodegradable polymer such as the aliphatic or the aliphatic-aromatic polyesters does not require the use of an external coupling agent.

The filler formed by the starch complex is dispersed in the hydrophobic polymer in quantities of from 0.5 to 50% by weight. The most suitable quantity depends on the type of polymer and on the properties to be imparted thereto. In general, quantities of from 2 to 30% by weight may advantageously be used.

For the test with boiling water, the material is ground in a cryogenic mill and reduced to powder which can pass through 0.5 mm mesh.

The powder is introduced into a reflux flask containing a volume of water 10 times the weight of the powder and is heated to boiling point for 4 hours with vigorous stirring and ultrasonication, if needed.

The following examples are provided by way of illustration of the invention.

In the following examples, the quantities of the components are expressed as percentages by weight unless specifically indicated otherwise.

### EXAMPLE 1

A mixture was prepared, containing:
- 40% Cerestar Globe 03401 starch (12.8% water)
- 40% Nippon Gohsei A-4412 EVOH (EVOH with 44% ethylene by moles)
- 12% glycerol
- 3% water
- 5% urea.

The mixture was supplied to an OMC single-screw extruder with D=20 mm and L/D=30, operating with the following temperature profile: 80/150/140/120°C and about 40 rpm..

The extruded material with about 6.5% H₂O was pelletized and then filmed by blow extrusion with a Haake extruder with D=10 mm and L/D=20 to give a film about 30 microns thick.

The film produced was ground in a cryogenic mill and reduced to powder which could pass through 0.5 mm mesh. About one gram of powder was then poured into a flask containing 100 ml of distilled water and the mixture was brought to boiling point with vigorous stirring for 4 hours. Upon completion, the insoluble residue, which was about 75% of the initial quantity, which amount corresponded to the sum of starch and EVOH, was filtered out.

The boiling residue, examined by TEM (Transmission Electron Microscope), was constituted by individual particles or by aggregates of particles in which the individual particles had diameters of less than 0.5 microns.

The film, examined by second derivative IR had a band of the starch/EVOH complex at 947 cm-1 and two peaks in the XR diffraction spectrum at 13° and 20° of 2θ.

### EXAMPLES 2-4

The following compositions, in which maize starch containing about 28% of amylose was used, were prepared as described in Example 1:

| Example | 2 | 3 | 4 |
|---|---|---|---|
| | % | % | % |
| Cerestar Globe 03401 starch | 50 | 58 | 65 |
| Nippon Gohsei E-3808 EVOH | 30 | 20 | 10 |
| Glycerol | 7 | 8 | 9 |
| Urea | 4 | 4 | 4 |
| Water | 9 | 10 | 12 |
| (EVOH E-3808 with 38% ethylene by moles) | | | |

Upon application of the breakdown upon boiling test, amounts of insoluble residues approximately equal to the sum of starch and EVOH were obtained. The dimension of the separated particles was less than 0.5 microns.

All of the films, when examined by second-derivative IR, had a band of the complex at 947 cm⁻¹ and when examined by XR showed two peaks at about 13° and 20° of 2θ.

### EXAMPLES 5-16

The following compositions, in which a starch with a high amylose content (Roquette Eurylon 7, 70% amylose) was used, were prepared as described in Example 1:

| Example | 5 | 6 | 7 | 8 | 9 | 10 | 11 | 12 | 13 | 14 | 15 | 16 |
|---|---|---|---|---|---|---|---|---|---|---|---|---|
| Eurylon 7 | 52 | 60 | 66 | 70 | 52 | 60 | 66 | 70 | 51 | 60 | 66 | 70 |
| D-2908 EVOH | 31 | 20 | 10 | 5 | - | - | - | - | - | - | - | - |
| E-3808 EVOH | - | - | - | - | 31 | 20 | 10 | 5 | - | - | - | - |
| A-4412 EVOH | - | - | - | - | - | - | - | - | 31 | 20 | 10 | 5 |
| Glycerol | 7 | 10 | 12 | 12 | 7 | 10 | 12 | 12 | 7 | 10 | 12 | 12 |
| Water | 10 | 10 | 13 | 13 | 10 | 10 | 12 | 13 | 10 | 10 | 12 | 13 |

Upon application of the breakdown in boiling water test, amounts of insoluble residues equal to the sum of starch and EVOH were obtained, even with the lowest concentrations of EVOH. The size of the separated particles was less than 1 micron, in all the cases but for the concentration of Eurylon between 52 and 60% the particles were by far lower than 0.5 microns.

All of the films, when examined by second-derivative IR, had a band of the complex at 947 cm⁻¹.

### EXAMPLE 17

Products obtained according to examples 2,3 and 4 brought to complexed starch with a water content between 6 and 10% which was mixed in a Pomini Farrel mixer at 155C at a content of 20% by weight, with 76% of an SB standard grade for treads and 4% of bis-3-triethoxysilyl propyl tetrasulphide. The final products after etching in DMSO showed a microdispersion of complexed starch with average dimension lower than 0.5 microns under TEM analysis.

### COMPARISON EXAMPLE 1

A composition similar to that of Example 5 but with the maize starch replaced by amylose-free waxy starch (Snowflake 04201 - Cerestar) was prepared.

Filming of the composition and its subjection to the breakdown in boiling water test did not produce a dispersion of micrometric particles, but a quantity polymer lumps equal to the quantity of EVOH present in the molecule.

A portion of the film examined by TEM showed a micro-layered structure.

### COMPARISON EXAMPLE 2

Comparison Example 1 was repeated but with 7.1 parts of waxy starch replaced by Eurylon 7 starch so that the final mixture had an amylose concentration of 5%. Filming of the composition and its subjection to the breakdown in boiling water test produced a residue corresponding to 40 parts of EVOH and 15 parts of starch; this means that the quantity of amylose present was not sufficient to screen the solvation of all of the amylopectin.

A portion of the film, examined by TEM, was shown to be of micro-layered structure.

### COMPARISON EXAMPLE 3

Example 1 was repeated but with the EVOH replaced by Du Pont Elvanol 71-30 polyvinyl alcohol.

Filming of the composition and its subjection to the breakdown in boiling water test did not produce any insoluble residue.

A portion of film, examined by TEM, showed a micro-layered structure.

### EXAMPLE 18

The following composition (parts by weight):

| | Comparison | A | B |
|---|---|---|---|
| Maize starch | 26.4 | 26.4 | 26.4 |
| Ecoflex (BASF) | 63.8 | 53.3 | 56.3 |
| Eco-PLA D4200 | 0 | 7.5 | 0 |
| (Cargill) | | | |
| Lactic/glycolic acid | - | - | 7.5 |
| copolymer (70:30) | | | |
| Glycerine | 5.5 | 4.35 | 4.6 |
| Water | 4.3 | 3.45 | 3.5 |

(Ecoflex is a poly(butylene adipate/terephthalate) copolymer) were extruded in a twin-screw extruder APV 2030 operating at 180°C/160 rpm and with a throughput of 40 Kg/h.

The water content and MFR after extrusion were:

| | water | MFR (dg/min) |
|---|---|---|
| Comparison | 1.6% | 2.3 |
| Test A | 1.7% | 2.6 |
| Test B | 1.6% | 2.5 |

The material was filmed in a Ghioldi apparatus (40 mm diameter and head of 100 mm)

Bags (60 X 90 cm) were produced.

A test using cut grass to fill the bags, conducted at 30°C and 75% RH gave the following result expressed as days for obtaining non-transportable bags:

| | days |
|---|---|
| comparison | 3 |
| Test A | 20 |
| Test B | 23 |

The IR spectrum of the film gave a FTIR band at about 947 cm⁻¹ typical of complexed starch.

After dissolution of Ecoflex, the residual starch was found to be complexed with polylactic acid and poly(lacticglycolic) acid.

## Claims

1. Hydrophobic polymers incompatible with starch containing, as a filler, a starch complex in the form of particles dispersed in the hydrophobic polymeric matrix and bound to the polymer matrix by means of coupling agents containing groups compatible with the matrix and with the starch complex or by means of reactive groups present in the starch-complex capable of being fixed to the polymeric matrix, **characterised in that** the starch complex is in the form of particles with a numeral average size of less than 1 micron, it has a solubility in water at 100°C of less than 20%, the amylose of starch being wholly in a complexed form and is **characterised by** a second-derivative IR absorption in the region of 940-950 cm⁻¹, and wherein the starch complex, in the case where the hydrophobic biodegradable polymers of the matrix are selected from the group consisting of the aliphatic or aliphatic-aromatic polyesters, the aliphatic polyamides, polyamides-polyesters, polyurethane polyesters, polyurethane-polyamides, polyurea-polyesters, is a complex of starch with a complexing agent different from the polymer forming the matrix and from ethylene-vinylalcohol capolymers.

2. Polymers according to claim 1, wherein the coupling agent is selected from the groups consisting of a vinyl silane, an alkyl titanate, and bis-3-triethoxysilylpropyl tetrasulphide.

3. Polymers according to claims 1 or 2, wherein the complexing agent different from the polymer forming the polymeric matrix is selected from the group consisting of polylactic acid, polyglycolic acid, poly(lactic-glycolic) acid copolymers, ethylene-acrylic acid copolymers, ethylene-vinylacetate copolymers.

4. Polymers according to any of claims 1 to 3, in which the quantity of filler comprising the complex dispersed in the hydrophobic polymer is from 0.5 to 50% by weight.

5. Polymers according to any of claims 1 to 4, in which the starch complexes are produced from compositions of starch with polymers compatible with starch containing lyophilic groups and lyophobic sequences, wherein the starch complex is present and from which a micro-dispersion of particles with numeral average diameters of less than 1 micron is formed by treatment in water at 100°C under stirring.

6. Polymers according to claims 1 to 5, produced with the use of compositions having a water content of less than 20%, and higher than 2% by weight, and a Tg below 0°C.

7. Polymers according to claim 5, in which the polymer which can form complexes with starch is selected from the group comprising copolymers of ethylene with polar monomers.

8. Polymers according to claim 7, in which the copolymer is selected from the group comprising copolymers of ethylene with vinyl alcohol, vinyl acetate and acrylic acid.

9. Polymers according to claim 8, in which the ethylene/vinyl alcohol copolymer contains from 50 to 75% of vinyl alcohol in moles.

10. Polymers according to claim 5, in which the polymer which can complex with the starch is selected from copolymers of polyester/polyurethane, polyamide/polyesters, aliphatic and aliphatic aromatic polyesters and polyamides.

11. Polymers according to claims 1 or 2, wherein the starch complexing agent is a fatty acid or a derivative thereof.

12. Polymers according to claims 1 or 2, wherein the starch complexing agent contains reactive groups for the hydrophobic matrix.

13. Polymers according to any of claim 1 to 12, in which the hydrophobic polymer incompatible with starch is selected from the group consisting of ethylene polymers and copolymers, crystalline propylene polymers and copolymers, aromatic polyester resins, polyamides, polyoxymethylene resins, polyphenylene oxide resins, and polycarbonates.

14. Polymers according to any of claims 1 to 12, in which the hydrophobic polymer is a rubber selected from the group consisting of styrene-butadiene rubbers, polybutadiene rubbers, polyisoprene rubbers, ethylene-propylene and ethylene-propylene-diene rubbers, and natural rubber.

15. A method for preparing filled polymers according to any of claims 1 to 14, in which a composition comprising the starch/polymer complex, forming part of a continuous interpenetrated structure between the complexing polymer and the complex is mixed, in the melt state or under hot mastication conditions, with the hydrophobic polymer incompatible with starch, in the presence of coupling agents containing groups reactive with the polymer matrix and with the complex.

16. A method preparing filled polymers according to any of claims 1 to 14, in which a composition comprising the starch/polymer complex is mixed with a rubber at a processing temperature between 140 and 160°C, in the presence of coupling agents containing groups reactive with the polymer matrix and with the complex.

17. A method according to claims 15 and 16, in which the coupling agent is selected from vinyl and tetrasulphide silanes and alkyl titanates.

18. A method according to any of claims 15, 16 and 17 in which the coupling agent is used in a quantity of from 0.05 to 10% by weight of the complex.

19. A method for preparing filled polymers according to claims 1 to 14 , wherein the polymeric matrix is a biodegradable polymer selected from the group consisting of the aliphatic-aromatic polyesters, the aliphatic polyamides, the polyamides-polyesters, polyurethane-polyesters, polyurethane-polyamides and polyurea-polyesters comprising melt-mixing the polymer forming the polymeric matrix with a complex of starch having the characteristics as set forth in claim 1 and further **characterised by** being formed of starch complexed with a complexing agent different from the polymer forming the matrix and from the ethylene-vinylalcohol copolymers.

20. A method according to claim 19, wherein the starch complex is preformed or formed during melt-mixing.

21. Shaped articles obtainable from the hydrophobic polymers of claims 1 to 14.

22. Shaped articles obtainable from the hydrophobic polymers of claims 1 to 14, wherein the hydrophobic polymer is selected from the group consisting of the aliphatic and aliphatic-aromatic polyesters, polyurethane-polyamides, polyurea-polyesters, and polyurethane-polyesters.

23. Films and compostable bags obtainable from the hydrophobic polymers of claims 1 to 14.

24. Tyres obtainable from the rubbers of claim 14.

## Patentansprüche

1. Hydrophobe Polymere, die inkompatibel mit Stärke sind und als Füllstoff einen Stärkekomplex in Form von Partikeln enthalten, welche in der hydrophoben Polymermatrix verteilt und an die Polymermatrix gebunden sind, und zwar durch Haftvermittler, die mit der Matrix und mit dem Stärkekomplex kompatible Gruppen enthalten, oder durch im Stärkekomplex vorhandene, reaktionsfähige Gruppen, die an der Polymermatrix fixiert werden können, **dadurch gekennzeichnet, dass** der Stärkekomplex in Form von Partikeln mit einer numerischen Durchschnittsgröße von weniger als 1 Mikrometer vorliegt, bei 100°C eine Wasserlöslichkeit von weniger als 20% aufweist, wobei die Stärkeamylose vollständig in komplexierter Form vorliegt, und durch eine second-derivative IR-Absorption im Bereich von 940-950 cm⁻¹ **gekennzeichnet** ist, und wobei der Stärkekomplex im Fall, dass die biologisch abbaubaren hydrophoben Polymere der Matrix ausgewählt sind aus der Gruppe, bestehend aus den aliphatischen oder aliphatisch-aromatischen Polyestern, den aliphatischen Polyamiden, Polyamidpolyestern, Polyurethanpolyestern, Polyurethanpolyamiden, Polyharnstoffpolyestern, ein Stärkekomplex mit einem Komplexbildner ist, der sich vom die Matrix bildenden Polymer und von Ethylenvinylalkohol-Copolymeren unterscheidet.

2. Polymere gemäß Anspruch 1, wobei der Haftvermittler ausgewählt ist aus den Gruppen, bestehend aus einem Vinylsilan, einem Alkyltitanat und Bis-3-triethoxysilylpropyltetrasulfid.

3. Polymere gemäß den Ansprüchen 1 oder 2, wobei der Komplexbildner, der sich vom die Polymermatrix bildenden Polymer unterscheidet, ausgewählt ist aus der Gruppe, bestehend aus Polymilchsäure, Polyglycolsäure, Poly(milchglycol)säure-Copolymeren, Ethylen-Acrylsäure-Copolymeren, Ethylen-Vinylacetat-Copolymeren.

4. Polymere gemäß einem der Ansprüche 1 bis 3, wobei die Menge an Füllstoff, umfassend den im hydrophoben Polymer verteilten Komplex, 0,5 bis 50 Gew.% beträgt.

5. Polymere gemäß einem der Ansprüche 1 bis 4, wobei die Stärkekomplexe aus Stärkezusammensetzungen mit Polymeren hergestellt werden, die mit Stärke kompatibel sind und welche lyophile Gruppen und lyophobe Sequenzen enthalten, in denen der Stärkekomplex vorhanden ist und aus denen durch Behandlung in Wasser bei 100°C unter Rühren eine Mikrodispersion von Partikeln mit numerischen Durchschnittsdurchmessern von weniger als 1 Mikrometer gebildet wird.

6. Polymere gemäß den Ansprüchen 1 bis 5, hergestellt unter Verwendung von Zusammensetzungen, die einen Wassergehalt von weniger als 20 und mehr als 2 Gew.% und eine Tg unter 0°C aufweisen.

7. Polymere gemäß Anspruch 5, wobei das Polymer, das mit Stärke Komplexe bilden kann, ausgewählt ist aus der Gruppe, umfassend Copolymere von Ethylen mit polaren Monomeren.

8. Polymere gemäß Anspruch 7, wobei das Copolymer ausgewählt ist aus der Gruppe, umfassend Copolymere von Ethylen mit Vinylalkohol, Vinylacetat und Acrylsäure.

9. Polymere gemäß Anspruch 8, wobei das Ethylen/Vinylalkohol-Copolymer 50 bis 75 Mol% Vinylalkohol enthält.

10. Polymere gemäß Anspruch 5, wobei das Polymer, das mit der Stärke komplexieren kann, ausgewählt ist aus Copolymeren von Polyester/Polyurethan, Polyamid/Polyestern, aliphatischen und aliphatisch-aromatischen Polyestern und Polyamiden.

11. Polymere gemäß den Ansprüchen 1 oder 2, wobei der Stärkekomplexbildner eine Fettsäure oder ein Derivat davon ist.

12. Polymere gemäß den Ansprüchen 1 oder 2, wobei der Stärkekomplexbildner reaktionsfähige Gruppen für die hydrophobe Matrix enthält.

13. Polymere gemäß einem der Ansprüche 1 bis 12, wobei das mit Stärke inkompatible hydrophobe Polymer ausgewählt ist aus der Gruppe, bestehend aus Ethylenpolymeren und -copolymeren, kristallinen Propylenpolymeren und -copolymeren, aromatischen Polyesterharzen, Polyamiden, Polyoxymethylenharzen, Polyphenylenoxidharzen und Polycarbonaten.

14. Polymere gemäß einem der Ansprüche 1 bis 12, wobei das hydrophobe Polymer ein Kautschuk ist, der ausgewählt ist aus der Gruppe, bestehend aus Styrol-Butadien-Kautschuken, Polybutadien-Kautschuken, Polyisopren-Kautschuken, Ethylen-Propylen- und Ethylen-Propylen-Dien-Kautschuken sowie Naturkautschuk.

15. Verfahren zur Herstellung gefüllter Polymere gemäß einem der Ansprüche 1 bis 14, wobei eine Zusammensetzung, umfassend den Stärke/Polymer-Komplex, welcher einen Teil einer durchgehenden ineinander geschachtelten Struktur zwischen dem komplexbildenden Polymer und dem Komplex bildet, in der Schmelzphase oder unter den Bedingungen einer heißen Mastikation mit dem mit Stärke inkompatiblen hydrophoben Polymer vermischt wird, und zwar in Gegenwart von Haftvermittlern, die Gruppen enthalten, welche mit der Polymermatrix und mit dem Komplex reaktionsfähig sind.

16. Verfahren zur Herstellung gefüllter Polymere gemäß einem der Ansprüche 1 bis 14, wobei eine Zusammensetzung, umfassend den Stärke/Polymer-Komplex, bei einer Verarbeitungstemperatur zwischen 140 und 160°C mit einem Kautschuk vermischt wird, und zwar in Gegenwart von Haftvermittlern, die Gruppen enthalten, welche mit der Polymermatrix und mit dem Komplex reaktionsfähig sind.

17. Verfahren gemäß den Ansprüchen 15 und 16, wobei der Haftvermittler ausgewählt ist aus Vinyl- und Tetrasulfidsilanen und Alkyltitanaten.

18. Verfahren gemäß einem der Ansprüche 15, 16 und 17, wobei der Haftvermittler in einer Menge von 0,05 bis 10 Gew.%, bezogen auf den Komplex, verwendet wird.

19. Verfahren zur Herstellung gefüllter Polymere gemäß den Ansprüchen 1 bis 14, wobei die Polymermatrix ein biologisch abbaubares Polymer ist, das ausgewählt ist aus der Gruppe, bestehend aus den aliphatisch-aromatischen Polyestern, den aliphatischen Polyamiden, den Polyamidpolyestern, Polyurethanpolyestern, Polyurethanpolyamiden und Polyharnstoffpolyestern, umfassend das Schmelzmischen des die Polymermatrix bildenden Polymers mit einem Stärkekomplex, welcher die in Anspruch 1 dargelegten Eigenschaften aufweist und weiters **dadurch gekennzeichnet ist, dass** er aus Stärke gebildet wird, die mit einem Komplexbilder, der sich vom die Matrix bildenden Polymer und von den Ethylenvinylalkohol-Copolymeren unterscheidet, komplexiert ist.

20. Verfahren gemäß Anspruch 19, wobei der Stärkekomplex vorgeformt oder während des Schmelzmischens gebildet wird.

21. Formstücke, erhältlich aus den hydrophoben Polymeren der Ansprüche 1 bis 14.

22. Formstücke, erhältlich aus den hydrophoben Polymeren der Ansprüche 1 bis 14, wobei das hydrophobe Polymer ausgewählt ist aus der Gruppe, bestehend aus den aliphatischen und aliphatisch-aromatischen Polyestern, Polyurethanpolyamiden, Polyharnstoffpolyestern und Polyurethanpolyestern.

23. Folien und kompostierbare Säcke, erhältlich aus den hydrophoben Polymeren der Ansprüche 1 bis 14.

24. Reifen, erhältlich aus den Kautschuken des Anspruchs 14.

## Revendications

1. Polymères hydrophobes incompatibles avec l'amidon contenant, en tant que charge, un complexe d'amidon sous la forme de particules dispersées dans la matrice polymère hydrophobe et lié à la matrice polymère au moyen d'agents de couplage contenant des groupes compatibles avec la matrice et avec le complexe d'amidon ou au moyen de groupes réactifs présents dans le complexe d'amidon capables d'être fixés sur la matrice polymère, **caractérisés en ce que** le complexe d'amidon est sous la forme de particules ayant une taille moyenne en nombre de moins de 1 micromètre, qu'il a une solubilité dans l'eau à 100°C de moins de 20%, l'amylose de l'amidon étant totalement sous une forme complexée et qu'il est **caractérisé par** une absorption IR par double dérivation dans la région de 940 à 950 cm⁻¹, et dans lesquels le complexe d'amidon, dans le cas où les polymères biodégradables hydrophobes de la matrice sont choisis dans le groupe consistant en les polyesters aliphatiques ou aliphatiques-aromatiques, les polyamides aliphatiques, les polyamides-polyesters, les polyuréthane polyesters, les polyuréthane-polyamides, les polyurée-polyesters, est un complexe d'amidon avec un agent complexant différent du polymère formant la matrice et des copolymères éthylène-alcool vinylique.

2. Polymères selon la revendication 1, dans lesquels l'agent de couplage est choisi dans les groupes consistant en un vinyle silane, un titanate d'alkyle, et le tétrasulfure de bis-3-triéthoxysilylpropyle.

3. Polymères selon la revendication 1 ou 2, dans lesquels l'agent complexant différent du polymère formant la matrice polymère est choisi dans le groupe consistant en l'acide polylactique, l'acide polyglycolique, les copolymères d'acide poly(lactique-glycolique), les copolymères éthylène-acide acrylique, les copolymères éthylène-acétate de vinyle.

4. Polymères selon l'une quelconque des revendications 1 à 3, dans lesquels la quantité de charge comprenant le complexe dispersée dans le polymère hydrophobe est de 0,5 à 50% en poids.

5. Polymères selon l'une quelconque des revendications 1 à 4, dans lesquels les complexes d'amidon sont produits à partir de compositions d'amidon avec des polymères compatibles avec l'amidon contenant des groupes lyophiles et des séquences lyophobes, dans lesquelles le complexe d'amidon est présent et à partir desquelles une micro-dispersion de particules ayant des diamètres moyens en nombre de moins de 1 micromètre est formée par traitement dans l'eau à 100°C sous agitation.

6. Polymères selon les revendications 1 à 5, produits avec l'utilisation de compositions ayant une teneur en eau de moins de 20%, et supérieure à 2% en poids, et une Tg inférieure à 0°C.

7. Polymères selon la revendication 5, dans lesquels le polymère qui peut former des complexes avec l'amidon est choisi dans le groupe comprenant des copolymères d'éthylène avec des monomères polaires.

8. Polymères selon la revendication 7, dans lesquels le copolymère est choisi dans le groupe comprenant des copolymères d'éthylène avec l'alcool vinylique, l'acétate de vinyle et l'acide acrylique.

9. Polymères selon la revendication 8, dans lesquels le copolymère éthylène/alcool vinylique contient de 50 à 75% d'alcool vinylique en moles.

10. Polymères selon la revendication 5, dans lesquels le polymère qui peut se complexer avec l'amidon est choisi parmi les copolymères de polyester/polyuréthane, polyamide/polyesters, les polyamides et polyesters aliphatiques aromatiques et aliphatiques.

11. Polymères selon la revendication 1 ou 2, dans lesquels l'agent complexant de l'amidon est un acide gras ou un dérivé de celui-ci.

12. Polymères selon la revendication 1 ou 2, dans lesquels l'agent complexant de l'amidon contient des groupes réactifs pour la matrice hydrophobe.

13. Polymères selon l'une quelconque des revendications 1 à 12, dans lesquels le polymère hydrophobe incompatible avec l'amidon est choisi dans le groupe consistant en les polymères et copolymères d'éthylène, les polymères et copolymères cristallins de propylène, les résines de polyester aromatiques, les polyamides, les résines de polyoxyméthylène, les résines d'oxyde de polyphénylène, et les polycarbonates.

14. Polymères selon l'une quelconque des revendications 1 à 12, dans lesquels le polymère hydrophobe est un caoutchouc choisi dans le groupe consistant en les caoutchoucs de styrène-butadiène, les caoutchoucs de polybutadiène, les caoutchoucs de polyisoprène, les caoutchoucs d'éthylène-propylène-diène et d'éthylène-propylène, et le caoutchouc naturel.

15. Procédé de préparation de polymères chargés selon l'une quelconque des revendications 1 à 14, dans lequel une composition comprenant le complexe amidon/polymère, faisant partie d'une structure enchevêtrée continue entre le polymère complexant et le complexe est mélangée, à l'état fondu ou sous des conditions de mastication à chaud, avec le polymère hydrophobe incompatible avec l'amidon, en présence d'agents de couplage contenant des groupes réactifs avec la matrice polymère et avec le complexe.

16. Procédé de préparation de polymères chargés selon l'une quelconque des revendications 1 à 14, dans lequel une composition comprenant le complexe amidon/polymère est mélangée avec un caoutchouc à une température de traitement entre 140 et 160°C, en présence d'agents de couplage contenant des groupes réactifs avec la matrice polymère et avec le complexe.

17. Procédé selon les revendications 15 et 16, dans lequel l'agent de couplage est choisi parmi les vinyle et tétrasulfure silanes et titanates d'alkyle.

18. Procédé selon l'une quelconque des revendications 15, 16 et 17, dans lequel l'agent de couplage est utilisé dans une quantité de 0,05 à 10% en poids du complexe.

19. Procédé de préparation de polymères chargés selon l'une quelconque des revendications 1 à 14, dans lequel la matrice polymère est un polymère biodégradable choisi dans le groupe consistant en les polyesters aliphatiques-aromatiques, les polyamides aliphatiques, les polyamides-polyesters, les polyuréthane-polyesters, les polyuréthane-polyamides et les polyurée-polyesters comprenant de mélanger à chaud le polymère formant la matrice polymère avec un complexe d'amidon ayant les caractéristiques définies à la revendication 1 et **caractérisé en outre en ce qu'**il est formé d'amidon complexé avec un agent complexant différent du polymère formant la matrice et des copolymères d'éthylène-alcool vinylique.

20. Procédé selon la revendication 19, dans lequel le complexe d'amidon est préformé ou formé pendant le mélangeage à chaud.

21. Articles mis en forme pouvant être obtenus à partir des polymères hydrophobes des revendications 1 à 14.

22. Articles mis en forme pouvant être obtenus à partir des polymères hydrophobes des revendications 1 à 14, dans lesquels le polymère hydrophobe est choisi dans le groupe consistant en les polyesters aliphatiques-aromatiques et aliphatiques, les polyuréthane-polyamides, les polyurée-polyesters, et les polyuréthane-polyesters.

23. Films et sacs compostables pouvant être obtenus à partir des polymères hydrophobes des revendications 1 à 14.

24. Pneus pouvant être obtenus à partir des caoutchoucs de la revendication 14.
